(19) Europäisches Patentamt
European Patent Office
Office européen des brevets

(11) EP 3 943 565 A1

(12) EUROPEAN PATENT APPLICATION
published in accordance with Art. 153(4) EPC

(43) Date of publication:
**26.01.2022 Bulletin 2022/04**

(21) Application number: **20772715.7**

(22) Date of filing: **17.03.2020**

(51) International Patent Classification (IPC):
***C09J 11/06*** (2006.01) ***C09J 133/00*** (2006.01)
***C09J 7/38*** (2018.01)

(52) Cooperative Patent Classification (CPC):
**C09J 7/38; C09J 11/06; C09J 133/00**

(86) International application number:
**PCT/JP2020/011580**

(87) International publication number:
**WO 2020/189652 (24.09.2020 Gazette 2020/39)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **19.03.2019 JP 2019051254**

(71) Applicant: **Mitsubishi Chemical Corporation**
**Chiyoda-ku**
**Tokyo 100-8251 (JP)**

(72) Inventor: **ISHIKAWA, Yuta**
**Tokyo 100-8251 (JP)**

(74) Representative: **Kuhnen & Wacker**
**Patent- und Rechtsanwaltsbüro PartG mbB**
**Prinz-Ludwig-Straße 40A**
**85354 Freising (DE)**

# (54) ADHESIVE COMPOSITION, ADHESIVE, AND ADHESIVE TAPE

(57) The following is provided as an adhesive composition which adheres strongly and maintains high static shear stably even when exposed to high temperature and high humidity with respect to poor adhesion adherends such as ethylene propylene diene rubber (EPDM), butyl rubber (IIR), chloroprene rubber (CR), styrene butadiene rubber (SBR), thermoplastic polyolefin rubber, and modified asphalt.

An adhesive composition containing an acrylic resin (A) containing a terminal carboxyl-containing monomer (a1) unit represented by the following general formula (1), a (meth)acrylic acid monomer (a2) unit and a hydroxyl-containing monomer (a3) unit; an epoxy crosslinking agent (b1), and an isocyanate crosslinking agent (b2). In general formula (1):

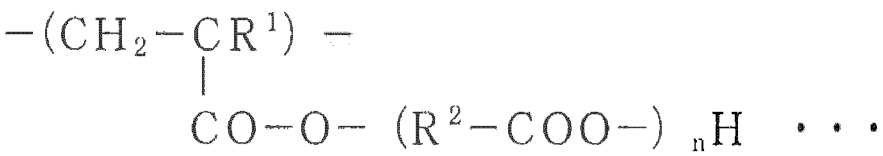
(1)

$R^1$ represents hydrogen or a methyl group, $R^2$ represents a saturated divalent aliphatic group, an unsaturated divalent aliphatic group, a divalent aromatic group, a saturated divalent alicyclic group, or an unsaturated divalent alicyclic hydrocarbon group, and n is a positive number of not less than 1.

EP 3 943 565 A1

## Description

TECHNICAL FIELD

The present disclosure relates to an adhesive composition, and more specifically, relates to an adhesive composition which has a higher adhesive strength to a higher polarity adherend, a lower polarity adherend, and a rubber-based poor adhesion adherend, particularly to ethylene propylene diene rubber (EPDM), and is excellent in stability of static shear under high temperature/high humidity, and relates to an adhesive agent and an adhesive tape produced by using the adhesive composition.

BACKGROUND ART

Conventionally, adhesive agents and adhesive tapes using acrylic resins are used in a wide variety of applications, for example, for packaging tapes such as craft tapes, OPP (oriented polypropylene) tapes, and fabric adhesive tapes, light packaging adhesive cellophane tapes, temporary fixing tapes, automotive foam tapes, damping sheets, re-releasable double-sided tapes, housing protection tapes, soundproof seals, carpet fixing double-sided tapes, temporary fixing tapes, electrically insulative vinyl tapes, exterior corrosion-proof tapes, interior bulletin board tapes, slippage preventing tapes, various masking tapes, various surface protection tapes, airtight waterproof adhesive tapes, medical band aids and other patch bases, surgical tapes, adhesive bandages, electric/electronic device tapes, optical double-sided tapes, surface protection films, semiconductor device dicing tapes, heat conductive tapes, heat resistant tapes, electrically conductive tapes, and the like.

The acrylic resins to be used for the adhesive agents and the adhesive tapes are generally acrylic resins prepared by copolymerizing an alkyl (meth)acrylate as the major component. For improving adhesiveness to an adherend, an acrylic resin prepared by using a carboxyl-containing monomer as a comonomer is known.

Further, for improving the adhesiveness to an adherend, it is proposed to use an acrylic acid adduct having a specific structure as the carboxyl-containing monomer (see, for example, PTL 1 to PTL 3).

RELATED ART DOCUMENTS

PATENT DOCUMENTS

PTL 1: JP-A-HEI2(1990)-196879
PTL 2: JP-A-2008-127431
PTL 3: JP-A-2014-40500

SUMMARY

In the art disclosed in PTL 1, the adhesive strength to the higher polarity adherend and the lower polarity adherend is improved by incorporating a greater proportion of the specific acrylic acid adduct as the comonomer. In PTL 1, however, a propylene adherend is used as the lower polarity adherend for the adhesive strength evaluation, but poor adhesion adherends such as ethylene propylene diene rubber (EPDM) for which the improvement of the adhesive strength is difficult are not used for the evaluation.

The art disclosed in PTL 2 provides an adhesive composition containing an acrylic resin prepared by the copolymerization of the acrylic acid adduct and having an acid value of 1 to 50 mgKOH/g, a hydroxyl value of 10 to 60 mgKOH/g, and a number-average molecular weight of 50,000 to 500,000, and a polyisocyanate compound. It is stated that the adhesive composition is excellent in long-lasting adherent/adhesive strength retaining property, moist heat resistance, heat resistance, and rework adhesive property. More specifically, the content of the acrylic acid adduct is relatively small, i.e., 1 wt.% based on the weight of the copolymerization formulation, and this is insufficient for the improvement of the adhesive strength. In PTL 2, the adherend used for the adhesiveness evaluation of the adhesive composition is a glass substrate, but not a poor adhesion adherend.

The art disclosed in PTL 3 provides an adhesive composition containing; (A) an acrylic resin prepared by using an alkyl(meth)acrylate, a carboxyl-containing (meth)acrylic monomer, and a hydroxyl-containing (meth)acrylic monomer; (B) a solvent; and (C) a crosslinking agent; wherein the carboxyl-containing (meth)acrylic monomer includes a (meth)acrylic monomer having a (meth)acrylic acid group and 2 to 6 carbonyl groups. It is stated that an adhesive agent less susceptible to deterioration in adhesive strength and static shear even in a high temperature environment can be provided by using the adhesive composition. However, no consideration is given to the adhesive strength and the static

shear with respect to the poor adhesion adherend. Therefore, the adhesive composition is not satisfactory.

In any of the disclosed arts, the stability of the static shear with respect to the poor adhesion adherend under high temperature/high humidity is not considered at all, and the stability of the static shear under high temperature/high humidity is still not satisfied.

In general, adhesive tapes using acrylic resins have excellent adhesiveness to a high polarity adherend, but do not exhibit sufficient adhesiveness to rubber-based poor adhesion adherends, particularly, low polarity adherends such as ethylene propylene diene rubber (EPDM).

For this reason, where adhesive tapes are used for the purpose of airtightness and waterproofness of seams of sheets made of roofing polymer sheet materials, for example, poor adhesion members such as ethylene propylene diene rubber (EPDM), butyl rubber (IIR), chloroprene rubber (CR), thermoplastic polyolefin rubber and modified asphalt and sheets made of polyvinyl chloride or chlorinated polyethylene, use is made of an adhesive tape using butyl rubber and an adhesive tape using asphalt having high adhesiveness to these poor adhesion adherends. However, the adhesive tape using butyl rubber and the adhesive tape using asphalt are poorer in durability, heat resistance, shear force resistance, and creep resistance (static shear) under certain stress. This problematically results in displacement of the sheets. On the other hand, a tape employing the conventional acrylic adhesive composition is rarely used because of its poor adhesiveness to the poor adhesion adherend such as the roofing polymer sheet material. However, there is a market demand for a tape employing an acrylic adhesive composition having adhesiveness comparable to that of the butyl rubber adhesive tape and the asphalt adhesive tape and having improved static shear for application to the poor adhesion adherend such as the roofing polymer sheet material.

Additionally, the adhesive tape is required to adhere strongly to a low polarity poor adhesion adherend such as EPDM, and to have high static shear with which sheets fixed with the tape is not displaced. Further, the adhesive tape is required to have the static shear which is stable even exposed to high temperature/high humidity conditions, considering the use in the field.

In view of the foregoing, the present disclosure provides an adhesive composition which adheres strongly to a poor adhesion adherend such ethylene propylene diene rubber (EPDM), has a high static shear, and stably maintains a high static shear even when exposed to high temperature/high humidity.

In view of such circumstances, the present inventors have repeated diligent research and resultantly found that an adhesive composition using an acrylic resin, which adheres strongly to rubber-based poor adhesion adherends, particularly poor adhesion adherends such as EPDM, has a high static shear, and further maintains a high static shear stably even when exposed to high temperature/high humidity, is obtained when the acrylic resin contains a specific terminal carboxyl-containing monomer unit, a (meth)acrylic acid monomer unit and a hydroxyl-containing monomer unit, and contains both an epoxy crosslinking agent and an isocyanate crosslinking agent.

That is, a first aspect of the present disclosure is an adhesive composition comprising an acrylic resin (A) containing a terminal carboxyl-containing monomer (a1) unit represented by the following general formula (1), a (meth)acrylic acid monomer (a2) unit and a hydroxyl-containing monomer (a3) unit; an epoxy crosslinking agent (b1), and an isocyanate crosslinking agent (b2).

[Chemical Formula 1]

$$-(CH_2-CR^1)-$$
$$\quad\ |$$
$$CO-O-(R^2-COO-)_nH \quad \cdots (1)$$

In the formula, $R^1$ represents hydrogen or a methyl group, $R^2$ represents a saturated divalent aliphatic group, an unsaturated divalent aliphatic group, a divalent aromatic group, a saturated divalent alicyclic group, or an unsaturated divalent alicyclic hydrocarbon group, and n is a positive number of not less than 1.

Further, a second aspect of the present disclosure is an adhesive agent obtained by crosslinking the adhesive composition of the first aspect, and a third aspect of the present disclosure is an adhesive tape obtained by forming the adhesive agent of the second aspect on a substrate.

It is generally known to improve adhesive strength by having a terminal carboxyl-containing monomer (a1) unit represented by the general formula (1) in the adhesive composition. Further, the present inventors have found that also the static shear is improved by using an acrylic resin (A) having a specific terminal carboxyl-containing monomer (a1) unit for the rubber-based poor adhesion adherends, especially the adherend made of ethylene propylene diene rubber (EPDM), and further found that an adhesive composition having stable static shear with respect to the poor adhesion adherend even when exposed to high temperature/high humidity is obtained if an acrylic resin (A) having a (meth)acrylic

acid monomer (a2) unit and a hydroxyl-containing monomer (a3) unit is combined with an epoxy crosslinking agent (b1) and an isocyanate crosslinking agent (b2).

The present disclosure relates to an adhesive composition comprising an acrylic resin (A) containing a terminal carboxyl-containing monomer (a1) unit represented by the following general formula (1), a (meth)acrylic acid monomer (a2) unit and a hydroxyl-containing monomer (a3) unit; and an epoxy crosslinking agent (b1) and an isocyanate crosslinking agent (b2). Therefore, the adhesive composition has excellent adhesiveness and static shear with respect to rubber-based poor adhesion adherends, particularly poor adhesion adherends such as EPDM, and further has static shear which is stable even when exposed to high temperature/high humidity. Accordingly, the adhesive composition is useful as various adhesive agents and adhesive tapes used for poor adhesion adherends, and particularly, can be suitably used as an adhesive tape for fixing EPDM sheets used for buildings.

[Chemical Formula 2]

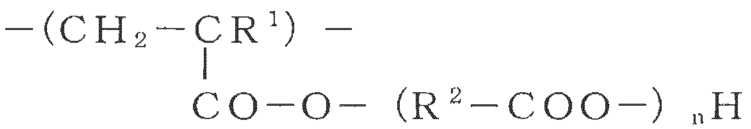 • • • (1)

In the formula, $R^1$ represents hydrogen or a methyl group, $R^2$ represents a saturated divalent aliphatic group, an unsaturated divalent aliphatic group, a divalent aromatic group, a saturated divalent alicyclic group, or an unsaturated divalent alicyclic hydrocarbon group, and n is a positive number of not less than 1.

In the present disclosure, particularly where the adhesive composition is an adhesive composition of which gel fraction when crosslinked is not less than 30 wt.%, adhesiveness to an adherend and static shear thereof may be more excellent.

In the present disclosure, particularly where the acrylic resin (A) contains the following monomer (a1) to (a4) units, adhesiveness to an adherend and static shear thereof may be more excellent.

1 to 20 wt.% of the monomer (a1) unit;

0.1 to 5 wt.% of the monomer (a2) unit;

0.01 to 5 wt.% of the monomer (a3) unit; and

55 to 97 wt.% of a (meth)acrylate monomer (a4) unit having a C4 to C24 alkyl group.

In the present disclosure, particularly where the content of the (meth)acrylic acid monomer (a2) unit based on 100 parts by weight of the terminal carboxyl-containing monomer (a1) unit represented by the general formula (1) is 10 to 400 parts by weight, adhesiveness to an adherend may be more excellent.

Further, in the present disclosure, particularly wherein the content of the epoxy crosslinking agent (b1) based on 100 parts by weight of the isocyanate crosslinking agent (b2) is 2.5 to 25 parts by weight, stability of the static shear under high temperature/high humidity for an adherend may be more excellent.

In the present disclosure, particularly wherein a tackifier (C) is contained, adhesiveness to an adherend may be more excellent.

The adhesive composition of the present disclosure can be used as one suitable for a poor adhesion adherend.

The adhesive agent prepared by crosslinking the adhesive composition may be more excellent in adhesiveness to an adherend.

In the present disclosure, particularly where the gel fraction of the adhesive composition is not less than 30 wt.%, adhesiveness to an adherend and static shear thereof may be more excellent.

DESCRIPTION OF EMBODIMENTS

The present embodiments will be illustrated in detail below.

In the present disclosure, the term "(meth)acrylic" means acrylic or methacrylic, and the term "(meth)acryloyl" means acryloyl or methacryloyl. Further, the term "(meth)acrylate" means acrylate or methacrylate, and the term "acrylic resin" means a resin prepared by polymerizing a copolymerization component including at least one (meth)acrylate monomer.

The adhesive composition of the present disclosure contains an acrylic resin (A) having specific monomer units.

<Acrylic resin (A)>

The acrylic resin (A) used in the present disclosure contains a terminal carboxyl-containing monomer (a1) unit represented by the following general formula (1), a (meth)acrylic acid monomer (a2) unit, and a hydroxyl-containing monomer (a3) unit.

[Monomer (a1) unit]

The monomer (a1) unit of the present disclosure is a terminal carboxyl-containing monomer unit represented by the following general formula (1).

[0030] [Chemical Formula 3]

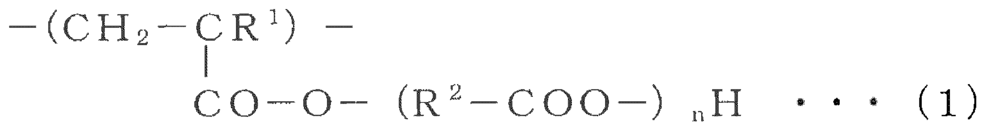

In the formula, $R^1$ represents hydrogen or a methyl group, $R^2$ represents a saturated divalent aliphatic group, an unsaturated divalent aliphatic group, a divalent aromatic group, a saturated divalent alicyclic group, or an unsaturated divalent alicyclic hydrocarbon group, and n is a positive number of not less than 1.

The $R^1$ is preferably hydrogen, and the hydrocarbon represented by $R^2$ is typically a C1 to C10, further C1 to C5, and particularly C1 to C2 alkylene such as a methylene group; and it is preferably phenyl, phenylene, further ethylene, and the n is preferably 1 to 10, further preferably 1 to 5, especially preferably 1 to 3, more preferably 1 to 2, and these may be used in combination.

The proportion of the monomer (a1) unit is typically 1 to 20 wt.%, particularly preferably 1.5 to 15 wt.%, more preferably 2 to 8.5 wt.%, based on the total weight of the acrylic resin (A). If the proportion is excessively small or excessively great, the adhesiveness to the poor adhesion adherends tends to be reduced.

The acrylic resin (A) having the monomer (a1) unit is obtained by polymerizing a monomer represented by the following chemical formula (2) as a copolymerization monomer.
[Formula]

$$CH_2=CR^1\text{-CO-O-}(R^2\text{-COO-})_nH \qquad (2)$$

(wherein, $R^1$ represents hydrogen or a methyl group, $R^2$ represents a saturated divalent aliphatic group, an unsaturated divalent aliphatic group, a divalent aromatic group, a saturated divalent alicyclic group, or an unsaturated divalent alicyclic hydrocarbon group, and n is a positive number of not less than 1.)

[Monomer (a2) unit]

The proportion of the (meth)acrylic acid monomer (a2) unit is typically 0.1 to 5 wt.%, particularly preferably 0.5 to 4.5 wt.%, more preferably 1 to 4 wt.%, based on the total weight of the acrylic resin (A). If the proportion is excessively small, the adhesiveness to the poor adhesion adherends tends to be reduced. If the proportion is too great, the adhesiveness to the poor adhesion adherends tends to be reduced.

Based on 100 parts by weight of the monomer (a1) unit, the proportion of the monomer (a2) unit is typically 10 to 400 parts by weight, particularly preferably 20 to 200 parts by weight, more preferably 25 to 100 parts by weight, especially preferably 30 to 75 parts by weight. If the proportion of the monomer (a2) unit is excessively small, the static shear tends to be reduced. If the proportion of the monomer (a2) unit is too great, the adhesiveness to the poor adhesion adherends tends to be reduced.

[Monomer (a3) unit]

Examples of the copolymerization monomer for forming the hydroxyl-containing monomer (a3) unit include: primary hydroxyl-containing monomers including hydroxyalkyl (meth)acrylates such as 2-hydroxyethyl (meth)acrylate, 4-hydroxybutyl (meth)acrylate, 5-hydroxypentyl (meth)acrylate, 6-hydroxyhexyl (meth)acrylate, and 8-hydroxyoctyl (meth)acrylate, caprolactone-modified monomers such as caprolactone-modified 2-hydroxyethyl (meth)acrylate, oxyalkylene-modified monomers such as diethylene glycol (meth)acrylate and polyethylene glycol (meth)acrylate, and 2-acryloyloxyethyl-2-hydroxyethyl phthalate; secondary hydroxyl-containing monomers such as 2-hydroxypropyl (meth)acrylate, 2-hydroxybutyl (meth)acrylate, and 3-chloro-2-hydroxypropyl (meth)acrylate; and tertiary hydroxyl-containing monomers such as 2,2-dimethyl-2-hydroxyethyl (meth)acrylate.
Of these, the primary hydroxyl-containing monomers are preferred, hydroxyalkyl (meth)acrylates are particularly preferred, and 2-hydroxyethyl (meth)acrylate and 4-hydroxybutyl (meth)acrylate are more preferred, because of their excellent reactivity with a crosslinking agent.
The hydroxyl-containing monomer (a3) unit is useful because it provides a crosslinking point by the isocyanate crosslinking agent (b2). The proportion of the hydroxyl-containing monomer (a3) unit is typically 0.01 to 5 wt.%, particularly preferably 0.05 to 3 wt.%, more preferably 0.05 to 2 wt.%, based on the total weight of the acrylic resin (A). If the proportion of the monomer (a3) unit is excessively small, the static shear tends to be reduced. If the proportion of the monomer (a3) unit is too great, the adhesiveness to the poor adhesion adherends tends to be reduced.

[Monomer (a4) unit]

The acrylic resin (A) used in the present embodiment desirably further has a (meth)acrylate monomer (a4) unit having a C4 to C24 alkyl group. The copolymerization monomer for forming the (meth)acrylate monomer (a4) unit having a C4 to C24 alkyl group preferably includes a (meth)acrylate monomer (a4-1) having a C4 to C7 alkyl group and a (meth)acrylate monomer (a4-2) having a C8 to C24 alkyl group.
Examples of the (meth)acrylate monomer (a4-1) having a C4 to C7 alkyl group include n-butyl (meth)acrylate, t-butyl (meth)acrylate, isobutyl (meth)acrylate, and n-hexyl (meth)acrylate. Of these, n-butyl (meth)acrylate is preferred from the viewpoint of easy availability and excellent economy.
Examples of the (meth)acrylate monomer (a4-2) having a C8 to C24 alkyl group include 2-ethylhexyl (meth)acrylate, n-octyl (meth)acrylate, isooctyl (meth)acrylate, isononyl (meth)acrylate, isodecyl (meth)acrylate, lauryl (meth)acrylate, tridecyl (meth)acrylate, isotridecyl (meth)acrylate, myristyl (meth)acrylate, isomyristyl (meth)acrylate, cetyl (meth)acrylate, stearyl (meth)acrylate, isostearyl (meth)acrylate, and behenyl (meth)acrylate. Of these, (meth)acrylates having a C8 to C12 alkyl group are preferred, 2-ethylhexyl (meth)acrylate is particularly preferred, because of its lower polarity and lower glass transition temperature.
The proportion of the monomer (a4) unit is typically 55 to 97 wt.%, particularly preferably 70 to 95 wt.%, more preferably 80 to 93 wt.%, based on the total weight of the acrylic resin (A). If the content of the monomer (a4) unit is excessively small, the adhesiveness to the poor adhesion adherends tends to be reduced. If the content of the monomer (a4) unit is excessively great, the adhesiveness and the static shear tend to be reduced.
A weight-based ratio between the proportion of the monomer (a4-1) unit and the proportion of the monomer (a4-2) unit is preferably (a4-1)/(a4-2)=1/99 to 85/15, particularly preferably 2/98 to 75/25, further preferably 3/97 to 70/30, more preferably 5/95 to 60/40, especially preferably 5/95 to 45/55. If the proportion of the monomer (a4-1) unit is excessively small, the static shear tends to be reduced. If the proportion of the monomer (a4-1) unit is excessively great, the adhesiveness to the poor adhesion adherends tends to be reduced.

[Monomer (a5) unit]

The acrylic resin (A) used in the present disclosure preferably further has a (meth)acrylate monomer (a5-1) unit having a C1 to C3 alkyl group, a cyclic structure-containing monomer (a5-2) unit, or a C3 to C10 vinyl ester monomer (a5-3) unit. The monomer (a5) is a generic term for the units (a5-1) to (a5-3).
Examples of the copolymerization monomer for forming the (meth)acrylate monomer (a5-1) unit having a C1 to C3 alkyl group include methyl (meth)acrylate, ethyl (meth)acrylate, and propyl (meth)acrylate. Of these, methyl (meth)acrylate and ethyl (meth)acrylate are preferred.
The copolymerization monomer for forming the cyclic structure-containing monomer (a5-2) unit is typically an acrylic monomer having a cyclic structure-containing substituent. Examples of the cyclic structure-containing monomer include:, heteroyclic (meth)acrylates, such as N-(meth)acryloylmorpholine, N-vinylpyrrolidone, N-vinylcaprolactam, vinylpyrrolidone, N-(meth)acryloyl piperidine, and N-(meth)acryloyl pyrrolidine, which contain morpholine ring, piperidine ring, pyrrolidine ring, piperazine ring or other heteroring; and phenyl (meth)acrylate, phenoxyethyl (meth)acrylate, phenyl diethylene glycol (meth)acrylate, 2-hydroxy-3-phenoxypropyl (meth)acrylate, tetrahydrofurfuryl (meth)acrylate, benzyl

(meth)acrylate, dicyclopentenyl (meth)acrylate, dicyclopentenyloxyethyl (meth)acrylate, dicyclopentanyl (meth)acrylate, nonylphenol polyethylene glycol (meth)acrylate, nonylphenoxy polyethylene glycol (meth)acrylate, isobornyl (meth)acrylate, and biphenyloxyethyl (meth)acrylate. Other examples of the cyclic structure-containing monomer include styrene and $\alpha$-methylstyrene. Of these, a heterocyclic (meth)acrylate containing the morpholine ring is preferred because it has well-balanced physical properties. Particularly, N-(meth)acryloylmorpholine is preferred because of its easy availability and safety.

Further, examples of the copolymerization monomer for forming the C3 to C10 vinyl ester monomer (a5-3) unit include vinyl formate, vinyl acetate, vinyl propionate, vinyl valerate, vinyl butyrate, vinyl isobutyrate, and vinyl pivalate. Of these, vinyl acetate is preferred because of its easy availability.

The proportion of the monomer (a5) unit is typically not higher than 11 wt.%, preferably not higher than 10 wt.%, particularly preferably not higher than 8 wt.%, based on the total weight of the acrylic resin (A). If the content of the component (a5) is excessively great, the adhesiveness to adherends tends to be reduced. The lower limit of the content of the component (a5) in the copolymerization formulation (a) is typically 1 wt.%.

[Monomer (a6) unit]

In the present disclosure, the other copolymerization monomer (a6) unit may be used as required. Examples of the copolymerization monomer for forming the other copolymerization monomer (a6) unit include functional group-containing monomers such as an acetoacetyl-containing monomer, an isocyanate-containing monomer, a glycidyl-containing monomer, an amino-containing monomer, and an amide-containing monomer, and other copolymerization monomers.

Examples of the acetoacetyl-containing monomer include 2-(acetoacetoxy)ethyl (meth)acrylate and allyl acetoacetate.

Examples of the isocyanate-containing monomer include 2-acryloyloxyethylisocyanate and 2-methacryloyloxyethylisocyanate, and alkylene oxide adducts of these isocyanates.

Examples of the glycidyl-containing monomer include glycidyl (meth)acrylate and allylglycidyl (meth)acrylate.

The amino-containing monomer may be a monomer having an ethylenically unsaturated double bond and an amino group (unsubstituted or substituted amino group). Examples of the amino-containing monomer include: monosubstituted amino-containing (meth)acrylates including aminoalkyl (meth)acrylates such as aminomethyl (meth)acrylate, aminoethyl (meth)acrylate, aminopropyl (meth)acrylate, and aminoisopropyl (meth)acrylate, and N-alkylaminoalkyl (meth)acrylates such as N-(t-butyl)aminoethyl (meth)acrylate; disubstituted amino-containing (meth)acrylates including N,N-dialkylaminoalkyl (meth)acrylates such as N,N-dimethylaminoethyl (meth)acrylate, N,N-diethylaminoethyl (meth)acrylate, and N,N-dimethylaminopropyl (meth)acrylate; dialkylaminoalkyl (meth)acrylamides such as N,N-dimethylaminopropyl (meth)acrylamide, and quaternary salts of these amino-containing monomers; amino-containing styrenes such as p-aminostyrene; dialkylamino-containing styrenes such as 3-(dimethylamino)styrene and dimethylaminomethylstyrene; dialkylaminoalkyl vinyl ethers such as N,N-dimethylaminoethyl vinyl ether and N,N-diethylaminoethyl vinyl ether; and allylamine, 4-diisopropylamino-1-butene, trans-2-butene-1,4-diamine, and 2-vinyl-4,6-diamino-1,3,5-triazine.

The amide-containing monomer may be a monomer having an ethylenically unsaturated double bond and an amide group (amide bond-containing group). Examples of the amide-containing monomer include: (meth)acrylamide; N-alkyl(meth)acrylamides such as N-methyl(meth)acrylamide, N-ethyl(meth)acrylamide, N-propyl(meth)acrylamide, N-isopropyl(meth)acrylamide, N-n-butyl(meth)acrylamide, N-isobutyl(meth)acrylamide, N-s-butyl(meth)acrylamide, N-t-butyl(meth)acrylamide, N-hexyl(meth)acrylamide, diacetone (meth)acrylamide, N,N'-methylenebis(meth)acrylamide, and N-(1,1-dimethyl-3-oxobutyl)(meth)acrylamide; N,N-dialkyl(meth)acrylamides such as N,N-dimethyl(meth)acrylamide, N,N-diethyl(meth)acrylamide, N,N-dipropyl(meth)acrylamide, N,N-diisopropyl(meth)acrylamide, N,N-di(n-butyl)(meth)acrylamide, N,N-diisobutyl(meth)acrylamide, N,N-di(s-butyl)(meth)acrylamide, N,N-di(t-butyl)(meth)acrylamide, N,N-dipentyl(meth)acrylamide, N,N-dihexyl(meth)acrylamide, N,N-diheptyl(meth)acrylamide, N,N-dioctyl(meth)acrylamide, N,N-diallyl(meth)acrylamide, and N,N-ethylmethylacrylamide; dialkylaminoalkyl(meth)acrylamides such as N,N-dimethylaminopropyl(meth)acrylamide; substituted amide-containing monomers such as N-vinylacetamide, N-vinylformamide, (meth)acrylamideethylethylene urea, and (meth)acrylamide-t-butyl sulfonate; hydroxy-containing (meth)acrylamides such as N-methylol(meth)acrylamide, N-hydroxyethyl(meth)acrylamide, and N-methylolpropane(meth)acrylamide; alkoxy-containing (meth)acrylamides such as N-methoxymethyl(meth)acrylamide, and N-(n-butoxymethyl)(meth)acrylamide; and quaternary salts of these amide-containing monomers.

Examples of the other copolymerization monomer include: alkoxy- or oxyalkylene-containing monomers such as 2-methoxyethyl (meth)acrylate, 2-ethoxyethyl (meth)acrylate, methoxydiethylene glycol (meth)acrylate, ethoxydiethylene glycol (meth)acrylate, methoxypolyethylene glycol (meth)acrylate, and polypropylene glycol mono(meth)acrylate; and acrylonitrile, methacrylonitrile, vinyl stearate, vinyl chloride, vinylidene chloride, alkyl vinyl ethers, vinyltoluene, dialkyl itaconate, dialkyl fumarate, allyl alcohol, acryl chloride, methyl vinyl ketone, allyltrimethylammonium chloride, and dimethylallyl vinyl ketone.

In order to control the physical properties according to the use application, the other copolymerization monomer (a6) may be contained in a proportion that does not impair the effects of the disclosure, for example, in an amount of not higher than 10 wt.%.

Thus, the acrylic resin (A) is obtained by polymerizing the monomers (a1) to (a3), and preferably, further the monomer (a4), and if necessary, further the monomers (a5) to (a6). Namely, the acrylic resin (A) containing the monomer (a1) to (a3) units, and preferably, further the monomer (a4) unit, and if necessary, further the monomer (a5) to (a6) units is obtained. These monomer (a1) to (a6) units may be used alone or in combination.

A solution polymerization method is preferably used for the polymerization, so that the acrylic resin (A) can be safely and stably prepared as having a desired monomer formulation.

In a typical solution polymerization method, a polymerization initiator, the copolymerization formulation including the monomers (a1) to (a4), and the like are mixed with or added dropwise to an organic solvent, and the polymerization is allowed to proceed under reflux or at 50°C to 98°C for 1 to 20 hours.

An ordinary radical polymerization initiator may be used as the polymerization initiator. Specific examples of the radical polymerization initiator include azo polymerization initiators such as azobisisobutyronitrile and azobisdimethylvaleronitrile, and peroxide polymerization initiators such as benzoyl peroxide, lauroyl peroxide, di-t-butyl peroxide, and cumene hydroperoxide, which may be used alone or in combination.

The use amount of the polymerization initiator is typically 0.001 to 5 parts by weight based on 100 parts by weight of the copolymerization formulation.

The acrylic resin (A) thus prepared typically has a weight-average molecular weight of 100,000 to 5,000,000, preferably 300,000 to 1,500,000, particularly preferably 400,000 to 900,000. If the weight-average molecular weight is excessively low, the durability tends to be reduced. If the weight-average molecular weight is excessively high, the adhesive force tends to be reduced.

The dispersity ratio (weight-average molecular weight/number-average molecular weight) of the acrylic resin (A) is preferably not higher than 20, particularly preferably not higher than 15, more preferably not higher than 10, especially preferably not higher than 7. If the dispersity ratio is excessively high, an adhesive agent layer formed from the adhesive composition tends to be poorer in durability and suffer from foaming. The lower limit of the dispersity ratio is typically 1.1 due to the limitation in the preparation of the acrylic resin.

The weight-average molecular weight of the acrylic resin (A) is based on standard polystyrene molecular weight, and is measured by high-performance liquid chromatography ("Waters 2695 (apparatus main boy)" and "Waters 2414 (detector)" available from Nihon Waters K.K.) with the use of three columns Shodex GPC KF-806L (each having an exclusion limit molecular weight of $2\times10^7$, a separation range of 100 to $2\times10^7$, a theoretical plate number of 10,000 per column, and filled with a column packing material of styrene-divinylbenzene copolymer having a particle diameter of 10 μm) connected in series. The number-average molecular weight may be determined by the same method.

Further, the acrylic resin (A) preferably has a glass transition temperature (Tg) of -80 to 10°C, particularly preferably -70 to -10°C, more preferably -65 to -20°C. If the glass transition temperature is excessively high, the tackiness tends to be insufficient. If the glass transition temperature is excessively low, the heat resistance tends to be reduced.

The the glass transition temperature(Tg) is calculated by putting the glass transition temperatures of homopolymers of the respective monomers of the acrylic resin (A) and the weight fractions of the respective monomers into the following Fox equation:

[Numerical Formula 1]

$$\frac{1}{Tg} = \frac{Wa}{Tga} + \frac{Wb}{Tgb} + \cdots + \frac{Wn}{Tgn}$$

Tg: The glass transition temperature (K) of the acrylic resin (A)
Tga: The glass transition temperature (K) of a homopolymer of a monomer A
Wa: The weight fraction of the monomer A
Tgb: The glass transition temperature (K) of a homopolymer of a monomer B
Wb: The weight fraction of the monomer B
Tgn: The glass transition temperature (K) of a homopolymer of a monomer N
Wn: The weight fraction of the monomer N

$$(Wa + Wb + \cdots + Wn = 1)$$

The glass transition temperatures of the homopolymers of the monomers of the acrylic resin (A) are typically measured in conformity with JIS K7121-1987 and JIS K6240 by means of a differential scanning calorimeter (DSC), or values shown in catalogs are used.

The viscosity of the acrylic resin (A) is controlled with the use of a solvent or the like, and the resulting solution of the acrylic resin (A) is used for coating. The viscosity of the solution of the acrylic resin (A) is preferably 500 to 20,000 mPa·s, particularly preferably 1,000 to 18,000 mPa·s, more preferably 2,000 to 15,000 mPa·s, from the standpoint of easy handling. If the viscosity is excessively high, the fluidity of the solution tends to be reduced, resulting in difficult handling. If the viscosity is excessively low, the coating with the adhesive agent tends to be difficult. The concentration of the solution in the coating is typically 10 to 70 wt.%.

The solvent may be one that dissolves the acrylic resin (A), but is not particularly limited. For example, ester solvents such as methyl acetate, ethyl acetate, methyl acetoacetate, and ethyl acetoacetate, ketone solvents such as acetone, methyl ethyl ketone, and methyl isobutyl ketone, aromatic solvents such as toluene, and xylene, and alcohol solvents such as methanol, ethanol, and propyl alcohol, can be used. Of these, ethyl acetate and methyl ethyl ketone are suitably used, and ethyl acetate is particularly suitably used, from the viewpoint of solubility, drying property and cost. These solvents may be used alone or in combination.

The viscosity of the solution of the acrylic resin (A) can be measured in conformity with "4.5.3 Rotational Viscometer Method" of JIS K5400 (1990).

<Crosslinking agent(B)>

The adhesive composition of the present disclosure contains a crosslinking agent(B) in addition to the acrylic resin (A).

The crosslinking agent(B) reacts with functional groups of the acrylic resin (A) to form a crosslinking structure, and is excellent in stability of the static shear when exposed to high temperature/high humidity by simultaneously using an epoxy crosslinking agent (b1) and an isocyanate crosslinking agent (b2).

Because of high reactivity with a carboxy group, the epoxy crosslinking agent (b1) reacts with an acrylic resin (A) having a terminal carboxyl-containing monomer (a1) unit represented by the general formula (1), in which the side chain extending from the main chain is relatively long and the polarity of the side chain is high, to form a crosslinked structure, though the reason for this is not clear. Then, the adhesive agent layer after cross-linking becomes a tough adhesive agent layer though it is flexible, and exhibits high peel strength and high static shear even for poor adhesion adherends. However, when exposed to high temperature/high humidity, the static shear tends to be reduced possibly because an ester bond chiefly constitutes the crosslinked structure and thus is hydrolyzed. On the other hand, since the isocyanate crosslinking agent (b2) has high reactivity with a hydroxyl group, it reacts with a hydroxyl-containing monomer (a3) unit of the acrylic resin (A), to form a crosslinked structure. Then, the crosslinked structure becomes a urethane bond having relatively high water resistance, and the static shear when exposed to high temperature/high humidity is stabilized. However, in contrast, the adhesive agent layer tends to be rigid, and the peel strength with respect to the poor adhesion adherends tends to decrease.

In addition, the isocyanate crosslinking agent (b2) also reacts with a carboxyl group with decarboxylation, to form an amide bond. This is also a bond with excellent stability when exposed to high temperature/high humidity, like the urethane bond.

It is guessed that by using the epoxy crosslinking agent (b1) and the isocyanate crosslinking agent (b2) in combination with the acrylic resin (A) containing the terminal carboxyl-containing monomer (a1) unit, the (meth)acrylic acid monomer (a2) unit and the hydroxyl-containing monomer (a3) unit, it is possible to obtain an adhesive composition that forms an adhesive agent layer having high peel strength with respect to the poor adhesion adherends and excellent in stability of the static shear when exposed to high temperature/high humidity, while compensating for each other's shortcomings.

Examples of the epoxy crosslinking agent (b1) include: aliphatic epoxy crosslinking agents such as ethylene glycol diglycidyl ether, trimethylolpropane diglycidyl ether, and diglycidylamine; alicyclic epoxy crosslinking agents such as 1,3-bis(N,N'-diglycidylaminomethyl)cyclohexane, 1,6-hexanediol diglycidyl ether, and N,N,N',N'-tetraglycidyl-m-xylylenediamine; aromatic epoxy crosslinking agents such as diglycidylaniline; and heterocyclic epoxy crosslinking agents such as 1,3,5-tris-(2,3-epoxybutyl)-isocyanurate, 1,3,5-tris-(3,4-epoxybutyl)-isocyanurate, and 1,3,5-tris-(4,5-epoxypentyl)-isocyanurate, and of these, alicyclic epoxy crosslinking agents are preferred. These can be used alone or in combination.

The isocyanate crosslinking agent (b2) contains at least two isocyanate groups, and includes, for example, aromatic polyisocyanates such as tolylene diisocyanate, diphenylmethanediisocyanate, and xylylenediisocyanate; aliphatic polyisocyanates such as hexamethylene diisocyanate; alicyclic polyisocyanates such as isophorone diisocyanate, and hydrogenated diphenylmethane diisocyanate, and a biuret form or an isocyanurate form of any of these compounds, further, an adduct form of any of these compounds which is a product of a reaction with a lower-molecular-weight active hydrogen-containing compound such as ethylene glycol, propylene glycol, neopentyl glycol, trimethylolpropane, and castor oil. Particularly, an adduct form of tolylene diisocyanate and trimethylolpropane is preferred. These can be used alone or in combination.

The content of the epoxy crosslinking agent (b1) is preferably 0.005 to 0.028 parts by weight, particularly 0.008 to 0.025 parts by weight, further 0.012 to 0.022 parts by weight, based on 100 parts by weight of the acrylic resin (A). If the content thereof is excessively small, the static shear tends to be reduced, while if excessively great, the adhesiveness to various adherends tends to be reduced.

The content of the isocyanate crosslinking agent (b2) is preferably 0.1 to 0.5 parts by weight, particularly 0.15 to 0.4 parts by weight, further 0.2 to 0.3 parts by weight, based on 100 parts by weight of the acrylic resin (A). If the content thereof is excessively small, the static shear tends to be reduced, while if excessively great, the adhesiveness to a low polarity adherend tends to be reduced.

The proportion of the epoxy crosslinking agent (b1) to the isocyanate crosslinking agent (b2) is preferably 2.5 to 25 parts by weight, particularly 3.5 to 15 parts by weight, further 5 to 10 parts by weight of the epoxy crosslinking agent (b1) with respect to 100 parts by weight of the isocyanate crosslinking agent (b2).

The crosslinking agent can be used after being diluted with a solvent, but the content and proportion indicate the actual content and proportion of the crosslinking agent excluding the solvent.

The present disclosure is characterized in that the crosslinking agents (b1) and (b2) are additionally used, however, other crosslinking agents may be used together in some cases. As the other crosslinking agents, for example, aziridine crosslinking agents, melamine crosslinking agents, aldehyde crosslinking agents, amine crosslinking agents, and metal chelate crosslinking agents may be further used together. These can be used alone or in combination, but the effects of the present disclosure are not manifested by a combination of crosslinking agents not including the component (b1) or the component (b2).

Examples of the aziridine crosslinking agent include: diphenylmethane-4,4'-bis(1-aziridinecarboxamide), trimethylolpropanetri-β-aziridinyl propionate, tetramethylolmethanetri-β-aziridinyl propionate, toluene-2,4-bis(1-aziridinecarboxamide), triethylenemelamine, bisisophthaloyl-1-(2-methylaziridine), tris-1-(2-methylaziridine)phosphine, and trimethylolpropanetri-β-(2-methylaziridine) propionate.

Examples of the melamine crosslinking agent include: melamine; methylol melamine derivatives such as amino-containing methylol melamine prepared by condensation of melamine and formaldehyde, imino-containing methylol melamine, and hexamethylol melamine; and alkylated methylol melamines such as partially- or fully-alkylated methylol melamines prepared by allowing the methylol melamine derivatives to react with a lower alcohol such as methyl alcohol or butyl alcohol for partial or full etherization, and partially- or fully-alkylated imino-containing methylol melamines.

Examples of the aldehyde crosslinking agent include: formaldehyde, acetaldehyde, propionaldehyde, butyraldehyde, glyoxal, glutaric aldehyde, dialdehyde starch; aldehyde compounds, such as hexamethylene tetramine, 1,4-dioxane-2,3-diol, 1,3-bis(hydroxymethyl)-2-imidazoline, dimethylol urea, N-methylolacrylamide, urea formalin resins, and melamine formalin resins, from which aldehydes are liberated in aqueous solutions; and aromatic aldehyde compounds such as benzaldehyde, 2-methylbenzaldehyde, 4-methylbenzaldehyde, p-hydroxybenzaldehyde, and m-hydroxybenzaldehyde.

Examples of the amine crosslinking agent include 4,4'-methylene-bis(2-chloroaniline) (hereinafter abbreviated as "MOCA"), modified MOCA, and diethyltoluenediamine.

Examples of the metal chelate crosslinking agent include chelates containing aluminum, zirconium, titanium, zinc, iron or tin as a metal atom. An aluminum chelate is preferred for performance. Examples of the aluminum chelate include diisopropoxyaluminum monooleyl acetoacetate, monoisopropoxyaluminum bisoleyl acetoacetate, monoisopropoxyaluminum monooleate monoethyl acetoacetate, diisopropoxyaluminum monolauryl acetoacetate, diisopropoxyaluminum monostearyl acetoacetate, and diisopropoxyaluminum monoisostearyl acetoacetate.

<Tackifier (C)>

A tackifier (C), which is not an essential ingredient but imparts the acrylic resin (A) with excellent physical properties, is preferably contained in the adhesive composition of the present disclosure. The tackifier (C) may be a resin compatible with the acrylic resin (A), and examples of the tackifier (C) include rosin resins, terpene resins, xylene resins, phenol resins, coumarone resins, and petroleum resins, which may be used alone or in combination. Of these, rosin resins, terpene resins, and petroleum resins are preferred.

Examples of the rosin resin include rosin ester resins prepared by esterifying a hydrogenation product, a disproportionation product, a dimerization product or an acid addition product of a raw material rosin with the use of glycerin or pentaerythritol, and rosin phenol resins prepared by addition of phenol to a raw material rosin. With the use of any of these rosin resins, the acrylic resin (A) can be imparted with more excellent physical properties. Particularly, a disproportionated rosin ester prepared by esterifying the disproportionation product of the raw material rosin with glycerin or pentaerythritol and having a softening point of 70°C to 130°C, a polymerized rosin ester prepared by esterifying

the dimerization product of the raw material rosin with pentaerythritol and having a softening point of 110°C to 170°C, and a rosin phenol prepared by adding phenol to a raw material rosin and having a softening point of 120°C to 160°C are preferred.

The terpene resin is a generic term for compounds represented by a molecular formula $(C_5H_6)_n$ according to the isoprene rule. Examples of the terpene resin to be used as the tackifier (C) in the present disclosure include resins prepared by homopolymerizing or copolymerizing monoterpenes (e.g., α-pinene, β-pinene, limonene, and the like) with the use of a Friedel-crafts catalyst. Specific examples of the resins prepared by the homopolymerization or the copolymerization of the monoterpenes include α-pinene resin, β-pinene resin, dipentene resin, terpene phenol resin, aromatic modified terpene resin, and hydrogenated terpene resins prepared by hydrogenating these resins. Of these, the terpene phenol resin is preferred because of its compatibility with the acrylic resin (A). The terpene phenol resin imparts the acrylic resin (A) with more excellent physical properties. Particularly, the terpene phenol resin preferably has a softening point of 90°C to 170°C and a hydroxyl value of 20 to 250 (mg KOH/g), more preferably a softening point of 100°C to 150°C and a hydroxyl value of 50 to 150 (mg KOH/g).

Examples of the petroleum resin include purified monomer resin, aliphatic C5 petroleum resin, aromatic C9 petroleum resin, and hydrogenated petroleum resin, which are prepared by polymerizing C4- to C5- and C9- to C11-fraction monomers generated by thermal decomposition of naphtha and the like and then hydrogenating the resulting polymer, and classified according to the type of the raw material fraction. The petroleum resin imparts the acrylic resin (A) with more excellent physical properties. Particularly, the petroleum resin preferably has a softening point of 90°C to 130°C. More preferably, the petroleum resin is a resin prepared by copolymerization of a styrene monomer and an aliphatic monomer.

The proportion of the tackifier (C) to be blended is properly set according to the physical property requirements, and is typically 1 to 50 parts by weight, particularly preferably 5 to 30 parts by weight, more preferably 5 to 20 parts by weight, based on 100 parts by weight of the acrylic resin (A).

The adhesive composition of the present disclosure may contain some other component, as long as the effects of the present disclosure are not impaired. Examples of the other component include a resin component other than the acrylic resin (A), acryl monomer, additives such as polymerization inhibitor, antioxidant, corrosion inhibitor, crosslinking accelerating agent, radical generator, peroxide, UV absorber, plasticizer, pigment, stabilizer, filler, and radical scavenger, and metal particles and resin particles. These can be used alone or in combination. The adhesive composition may slightly contain impurities and the like attributable to the ingredients of the components of the adhesive composition.

The proportion of the other component is preferably not greater than 5 parts by weight, particularly preferably not greater than 1 part by weight, more preferably not greater than 0.5 parts by weight, based on 100 parts by weight of the acrylic resin (A). If the proportion of the other component is excessively great, the compatibility with the acrylic resin (A) and the durability tend to be reduced. If sufficient effects cannot be provided by adding additives (the pigment, the filler, the metal particles, the resin particles, and the like) in the aforementioned contents, the contents of these additives may be properly adjusted so as to ensure the effects of the additives without impairing the effects of the present disclosure.

As described above, the adhesive composition of the present disclosure contains the acrylic resin (A) and the crosslinking agent (B), and if necessary, the tackifier (C), and further, the other components.

The adhesive composition of the present disclosure is prepared by mixing the aforementioned components. The adhesive agent of the present disclosure is produced by crosslinking the adhesive composition. The adhesive agent can be applied to various substrates to give an adhesive agent of an adhesive tape, and particularly, can be suitably used as an adhesive agent layer of an adhesive tape for the poor adhesion adherends.

The adhesive composition of the present disclosure preferably has a gel fraction when crosslinked of not less than 30 wt.% from the standpoint of an increase in the static shear with respect to the poor adhesion adherences, and particularly preferably has a gel fraction of not less than 35 wt.%. For adjusting the gel fraction to not less than 30 wt.%, the kinds and the contents of the epoxy crosslinking agent (b1) and the isocyanate crosslinking agent (b2) may advantageously be regulated, and the upper limit of the gel fraction is preferably not higher than 50 wt.%, particularly preferably not higher than 45 wt.%. If the gel fraction is less than 30 wt.%, the static shear with respect to the poor adhesion adherends tends to decrease. If the gel fraction is over 50 wt.%, the peel strength with respect to the poor adhesion adherends tends to be reduced.

<Adhesive tape>

The adhesive tape of the present disclosure contains an adhesive agent layer formed of the adhesive agent produced by crosslinking the adhesive composition. More specifically, the adhesive composition is dissolved in a solvent such as ethyl acetate to a solid concentration of 10 to 70 wt.%, whereby an adhesive composition solution is prepared for coating. The solution is applied onto a substrate, and dried. Thus, the adhesive tape is produced.

A generally known adhesive tape production method may be used for the production of the adhesive tape.

Examples of the production method include: a method including the steps of applying the adhesive agent on one surface of a substrate, drying the adhesive agent, and superposing a release liner on a surface of the resulting adhesive agent layer; and a method including the steps of applying the adhesive agent on one surface of a release liner, and superposing a substrate on a surface of the resulting adhesive agent layer. Particularly, the method including the steps of applying the adhesive agent on one surface of a release liner, and superposing a substrate on a surface of the resulting adhesive agent layer is preferred for handing.

The substrate is preferably a hand-tearable substrate. The surface of the hand-tearable substrate may be subjected to a commonly known surface treatment, e.g., a physical treatment such as corona discharge treatment or plasma treatment, or a chemical treatment such as priming treatment, as required.

The substrate may be a conventionally known substrate, but is not particularly limited. Examples of the substrate include rayon fabrics, cotton fabrics, polyester fabrics, fabrics of rayon/polyester blended yarns, nonwoven fabrics, flat yarn cloths, and laminate films including a flat yarn cloth laminated with a plastic film. Of these, the flat yarn cloth-containing substrates are preferred because of their high longitudinal tensile strength.

The flat yarn cloths are woven fabrics each produced by weaving so-called flat yarns prepared by cutting a polyethylene or polypropylene film into strips and stretching the strips to strengthen the yarns. Warp flat yarns and weft flat yarns of such a woven fabric to be used are fusion-bonded at intersections thereof for prevention of misalignment thereof.

Examples of the release liner include: plastic films made of plastics such as polyolefin resin (e.g., polyethylene), polyester resin (e.g., polyethylene terephthalate), vinyl acetate resin, polyimide resin, fluororesin, and cellophane; paper such as Kraft paper and Japanese paper; rubber sheets such as made of natural rubber and butyl rubber; foam sheets such as obtained by foaming polyurethane and polychloroprene rubber; metal foils such as aluminum foil and copper foil; and composite materials prepared from any of these materials. These release liners may be each subjected to a surface treatment such as corona treatment, which is performed on one or both of the surfaces of the release liner.

Other examples of the release liner include: laminated paper sheets prepared by laminating glassine paper, Kraft paper or clay-coated paper with a film of polyethylene or the like; paper sheets coated with a resin such as polyvinyl alcohol or acrylic acid ester copolymer; and synthetic resin films such as polyester film and polypropylene film coated with a release agent such as fluororesin or silicone resin.

Of these, the paper release liner is preferred because of its easy hand tearability. Particularly, the paper release liner preferably has a paper weight of 40 to 120 $g/m^2$, more preferably 50 to 80 $g/m^2$. Further, the release liner preferably has a thickness of 40 to 180 $\mu$m, particularly preferably 60 to 140 $\mu$m, more preferably 80 to 120 $\mu$m. If the thickness of the release liner is excessively small, the release liner is liable to be wrinkled during the winding thereof, making the production thereof difficult. If the thickness of the release liner is excessively great, the adhesive tape tends to be poorer in hand tearability.

A common coating applicator may be used for applying the adhesive agent onto one surface of the substrate or the release liner. Examples of the coating applicator include knife-on-roll coater, die coater, roll coater, bar coater, gravure roll coater, reverse roll coater, dipping device, and blade coater.

The adhesive agent layer preferably has 5 to 200 $\mu$m, particularly preferably 10 to 150 $\mu$m, more preferably 15 to 130 $\mu$m, after being dried.

If the thickness of the adhesive agent layer is excessively great, the application of the adhesive agent tends to be difficult. If the thickness of the adhesive agent layer is excessively small, it will be impossible to provide a sufficient adhesive strength.

The adhesive tape of the present disclosure may be a single-sided adhesive tape, or may be a double-sided adhesive tape. The double-sided adhesive tape may have adhesive agent layers having the same formulation or different formulations.

Where release liners are respectively provided on the adhesive agent layers of the double-sided adhesive tape, the release liners on the opposite sides of the double-sided adhesive tape are preferably selected so as to differ in peel strength for improvement of working efficiency. For example, the release liners are selected so that one of the release liners present on a side of the double-sided adhesive tape to be first attached to an adherend has a lower peel strength than the other release liner present on a side of the double-sided adhesive tape to be next attached to another adherend. Thus, the working efficiency is improved.

The conditions for the drying may be such that a solvent and residual monomers present in the adhesive agent can be dried off and, where the crosslinking agent (B) is used, the functional groups of the acrylic resin (A) resin can react with the crosslinking agent (B) to form a crosslinked structure. For example, the drying conditions preferably include a drying temperature of 60°C to 120°C and a drying period of about 1 to about 5 minutes. After the drying, the crosslinking reaction may be allowed to further proceed by keeping the adhesive agent layers between sheet substrates to maturity (for aging).

The adhesive tape of the present disclosure may be in a roll form or in a sheet form, or may be processed into other various shapes.

Where the adhesive tape is the double-sided adhesive tape of the sheet form, it is preferred to respectively provide release liners on opposite surfaces of the two adhesive agent layers. Where the adhesive tape is the double-sided adhesive tape of the roll form, it is preferred to provide a release liner on a surface of only one of the two adhesive agent layers.

Thus, the adhesive tape of the present disclosure is produced. The adhesive tape of the present disclosure is free from degradation in adhesive physical properties with respect to a poor adhesion adherend or substrate, and has excellent static shear. Where the hand-tearable substrate is used as the substrate film, the adhesive tape can be easily cut in the tape transverse direction at any desired position by hand without the use of a tape cutter or the like and, hence, is particularly useful.

The adhesive composition of the present disclosure has a peel strength with respect to ethylene propylene diene rubber (EPDM) when processed into a tape of preferably not less than 15 N/25 mm, particularly preferably not less than 16 N/25 mm, more preferably not less than 18 N/25 mm. The static shear after the moist heat treatment at 40°C and 90% RH for 14 days after pasting to ethylene propylene diene rubber is preferably not less than 50 minutes, particularly preferably not less than 80 minutes, more preferably not less than 120 minutes. For adjusting the peel strength to not less than 15 N/25 mm and adjusting the static shear after the moist heat treatment to not less than 50 minutes, the formulation of the acrylic resin (A) in the adhesive composition may advantageously be regulated and the kinds and the contents of the epoxy crosslinking agent (b1) and the isocyanate crosslinking agent (b2) may advantageously be regulated.

The adhesive agent layer of the adhesive tape preferably has a 180-degree peel adhesion of 1 to 100 N/25 mm with respect to an ordinary adherend as measured in conformity with JIS Z0237.

Particularly, where a test plate made of ethylene propylene diene rubber, chloroprene rubber (CR), natural rubber (NR), styrene butadiene rubber (SBR) or butyl rubber (IIR) that is a poor adhesion adherend is used as the adherend, the 180-degree peel adhesion is preferably not less than 15 N/25 mm, particularly preferably not less than 16 N/25 mm, more preferably not less than 18 N/25 mm. The upper limit of the 180-degree peel adhesion is typically about 100 N/25 mm.

Where a test plate of SUS304 steel is used as a higher polarity adherend, the adhesive tape preferably has a 180-degree peel adhesion of not less than 25 N/25 mm, particularly preferably not less than 30 N/25 mm, more preferably not less than 35 N/25 mm. The upper limit of the 180-degree peel adhesion is typically about 100 N/25 mm.

The adhesive strength is liable to vary depending upon the formulation (material quality) and the surface state (surface roughness) of the adherend, and the conditions for treating (cleaning) the adherend and, therefore, is not limited to the peel strength ranges described above.

The adhesive strength is measured in conformity with JIS Z0237, more specifically, by methods to be described later in EXAMPLES.

Where the double-sided adhesive tape is used as a test sample, an adhesive surface not to be subjected to the test is covered with a polyethylene terephthalate film (LUMIRROR S10 available from Toray Industries, Inc.) having a nominal thickness of 25 $\mu$m specified in JIS C2318 for the measurement.

The adhesive agent layer of the adhesive tape of the present disclosure is evaluated for the static shear based on measurement by a method to be described later in EXAMPLES. In this case, it is particularly preferable that, the test sample does not fall from the test plate after a lapse of 24 hours, and preferably that, even if the test sample falls within 24 hours, the retention time of the test sample is not shorter than 100 minutes.

The adhesive tape of the present disclosure has a static shear after the moist heat treatment at 40°C and 90% RH for 14 days with respect to ethylene propylene diene rubber (EPDM) of preferably not less than 50 minutes, particularly preferably not less than 80 minutes, and more preferably not less than 120 minutes.

Further, the gel fraction of the adhesive agent layer of the adhesive tape is preferably 30 to 50 wt.%, particularly preferably 35 to 42 wt.%, from the standpoint of adhesiveness and static shear. If the gel fraction is excessively low, the static shear with respect to the adherend tends to decrease. While, if the gel fraction is excessively high, adhesion with respect to the adherend tends to decrease. An adhesive composition having a gel fraction in the preferable range and containing the epoxy crosslinking agent (b1) and the isocyanate crosslinking agent (b2) together is preferable in that the adhesion strength and the static shear are well-balanced at high level and the high static shear is easily maintained stably even when exposed to high temperature/high humidity.

The gel fraction is a measure for the degree of crosslinking (degree of curing), and is calculated by the following method. That is, a 200 mesh SUS wire mesh of a size that can wrap the resultant adhesive tape is prepared, and its weight is measured (1). The paper release liner is peeled from the adhesive tape, the adhesive tape is wrapped in the SUS wire mesh, and the weight of the tape is measured together with the wire mesh (2). It is immersed in toluene kept at 23°C for 48 hours, then, it is sufficiently dried, and the weight of the tape is measured together with the wire mesh (3). The tape after immersion is taken out from the wire mesh, the remaining adhesive agent layer is removed, then, the weight of the substrate is measured (4). Subtraction is performed as shown in the following formula, and the weight percentage of the adhesive agent component after immersion with respect to that before immersion is defined as the

gel fraction.

[Formula] gel fraction (%) = (weight of tape after immersion including weight of SUS wire mesh (3) - weight of substrate (4) - weight of SUS wire mesh (1))/(weigh of tape before immersion including weight of SUS wire mesh (2) - weight of substrate (4) - weight of SUS wire mesh (1))×100

Adjustment of the gel fraction of the adhesive agent in the above range is attained by regulating the kind and the amount of the crosslinking agent (B).

The adhesive tape of the present disclosure preferably has a higher tensile strength. The adhesive tape is required to have a sufficient strength when being pulled without distortion or removed for positional correction after being applied to a poor adhesion adherend. The adhesive tape preferably has a tensile strength of not less than 20 N/25 mm, more preferably not less than 30 N/25 mm, still more preferably not less than 50 N/25 mm. The upper limit of the tensile strength is typically 250 N/25 mm. The double-sided adhesive tape can be imparted with a higher tensile strength by employing a film having a tensile strength equal to or greater than that of the intended adhesive tape as the substrate film.

The adhesive tape of the present disclosure can be used in a wide variety of applications, for example, for packaging tapes such as craft tapes, OPP tapes, and fabric adhesive tapes, light packaging adhesive cellophane tapes, automotive foam tapes, damping sheets, housing protection tapes, soundproof seals, carpet fixing double-sided tapes, electrically insulative vinyl tapes, exterior corrosion-proof tapes, interior bulletin board tapes, slippage preventing tapes, airtight waterproof adhesive tapes, medical band aids and other patch bases, surgical tapes, adhesive bandages, electric/electronic device tapes, optical double-sided tapes, semiconductor device dicing tapes, heat conductive tapes, heat resistant tapes, electrically conductive tapes, and he like.

The adhesive tape can be used, for example, in a structure of a house, its members, and gaps between the members. Though the adherend is not particularly restricted, where used as an adhesive tape, the adhesive tape can be suitably used for sheet materials composed of poor adhesion adherends such as, for example, ethylene propylene diene rubber (EPDM), butyl rubber (IIR), chloroprene rubber (CR), natural rubber (NR), styrene butadiene rubber (SBR), polyvinyl chloride, chlorinated polyethylene, thermoplastic polyolefin rubber, and modified asphalt.

## EXAMPLES

The embodiments of the present disclosure will hereinafter be described more specifically by way of examples thereof. It should be understood that the present disclosure be not limited to these examples within the scope of the present disclosure. In the following examples, "parts" and "%" are based on weight.

First, acrylic resins (A) were prepared in the following manner. The weight-average molecular weight, the dispersity ratio, and the glass transition temperature of each of the acrylic resins (A) were measured by the methods described above.

<Acrylic resin (A)>

Prior to the preparation of the acrylic resins (A), the following compounds were prepared for the copolymerization formulation (a).

Component (a1)

- Terminal carboxyl-containing monomer represented by the following general formula (2)

$$CH_2{=}CR^1\text{-}CO\text{-}O\text{-}(R^2\text{-}COO\text{-})_nH \qquad (2)$$

In the general formula (2), $R^1$ is hydrogen, $R^2$ is an ethylene chain, and n is 1 to 5.

Component (a2)

- Acrylic acid

Component (a3)

- 2-Hydroxyethyl methacrylate

Component (a4-1)

- n-Butyl acrylate

Component (a4-2)

- 2-Ethylhexyl acrylate

Component (a5)

- Methyl acrylate

"SIPOMER-H" available from Solvay Nicca, Ltd. was used as the component(a1).

SIPOMER-H is a mixture containing 56% of a compound (a1-1) represented by the general formula (1) in which $R^1$ is hydrogen, $R^2$ is an ethylene chain, and n=1, 16.1% of a compound (a1-2) in which $R^1$ is hydrogen, $R^2$ is an ethylene chain, and n=2 to 5, and 27.9% of the acrylic acid (a2) (hereinafter, the compound represented by the general formula (1) in which $R^1$ is hydrogen, $R^2$ is an ethylene chain, and n=1 to 5 contained in SIPOMER-H is referred to as "CAO" in some cases).

[Preparation of Acrylic Resin (A)]

First, 5 parts of SIPOMER-H [3.6 parts of CAO (a1), 1.4 parts of acrylic acid (a2)], 0.1 parts of 2-hydroxyethyl methacrylate (a3), 25.8 parts of n-butyl acrylate (a4-1), 63.1 parts of 2-ethylhexyl acrylate (a4-2), and 6 parts of methyl acrylate (a5) (as copolymerization formulations), and further, 55 parts of ethyl acetate (as a solvent), and 0.15 parts of azobisisobutyronitrile (as a polymerization initiator) were fed into a reaction vessel provided with a thermometer, a stirrer, and reflux cooler. While heating the resultant mixture under stirring, polymerization was allowed to proceed at an ethyl acetate (mixture) reflux temperature for 7 hours. Then, the resulting reaction mixture was diluted with ethyl acetate. Thus, a solution of the acrylic resin (A) having a solid content of 50% was prepared.

The acrylic resin (A) thus prepared had a weight-average molecular weight of 620,000, a dispersity ratio of 5.8, and a glass transition temperature of -59°C.

<Crosslinking agent(B)>

The following compounds were prepared as the crosslinking agent (B).

- Epoxy crosslinking agent (b1): TETRAD-C (1,3-bis(N,N-diglycidylaminomethyl)cyclohexane) available from Mitsubishi Gas Chemical Co., Ltd.
- Isocyanate crosslinking agent (b2): CORONATE L-55E (having a solid content of 55%) available from Tosoh Corporation.

<Tackifier (C)>

The following compound was prepared as the tackifier (C).

- Disproportionated rosin ester: SUPERESTER A-100 (a glycerin ester of disproportionated rosin having a softening point of 95°C to 105°C) available from Arakawa Chemical Industries, Ltd.

<Example 1>

Thus prepared solution of the acrylic resin (A) was mixed with 0.015 parts (reduced by solid content (resin content)) of the epoxy crosslinking agent (b1) (TETRAD-C), 0.25 parts (reduced by solid content (resin content)) of the isocyanate crosslinking agent (b2) (CORONATE L-55E), and 15 parts of the tackifier (C), with respect to 100 parts of the solid content (resin content) of the solution, and the concentration of the solid content was adjusted to 40% with ethyl acetate, and the mixture was stirred to homogeneity. Thus, an adhesive composition solution was prepared.

<Examples 2,3 and Comparative Examples 1 to 4>

Adhesive compositions of Examples 2,3 and Comparative Examples 1 to 4 were obtained in the same manner as in Example 1, except that the formulations of the adhesive composition were changed as shown in Table 1 below in Example 1.

The resultant adhesive compositions of Examples 1 to 3 and Comparative Examples 1 to 4 were used to make adhesive tapes as described below, and the following evaluations were carried out. The evaluation results are shown in Table 1 described later.

[Production of Adhesive Tapes]

The adhesive composition solutions prepared in the aforementioned manners were each applied onto a release surface of a paper release liner (SS-70-SBX available from Shinomural Chemical Industry Co., Ltd.) by means of an applicator and dried at 80°C for 5 minutes so as to form an adhesive composition layer having a dried thickness of 110 μm. Then, the adhesive composition layer was bonded to a flat yarn (available from Diatex Co., Ltd. and having a thickness of 130 μm). Thereafter, the layer was thermally aged in a dryer at 40°C for 7 days. Thus, adhesive tapes were produced.

<Gel fraction>

A 200 mesh SUS wire mesh of a size that can wrap the resultant adhesive tape is prepared, and its weight is measured (1). The paper release liner is peeled from the adhesive tape, the adhesive tape is wrapped in the SUS wire mesh, and the weight of the tape is measured together with the wire mesh (2). It is immersed in toluene kept at 23°C for 48 hours, then, it is sufficiently dried, and the weight of the tape is measured together with the wire mesh (3). The tape after immersion is taken out from the wire mesh, the remaining adhesive agent layer is removed, then, the weight of the substrate is measured (4). Subtraction is performed as shown in the following formula, and the weight percentage of the adhesive agent component after immersion with respect to that before immersion is defined as the gel fraction.

[Formula] gel fraction (%) = (weight of tape after immersion including weight of SUS wire mesh (3) - weight of substrate (4) - weight of SUS wire mesh (1))/(weigh of tape before immersion including weight of SUS wire mesh (2) - weight of substrate (4) - weight of SUS wire mesh (1))×100

<180-Degree Peel Adhesion>

The adhesive tape was cut into a width of 25 mm and a length of 150 mmm, to prepare a test piece. Further, after cleaning the surface of a test plate of ethylene propylene diene rubber (EPDM) (available from Engineering Test Service Co., Ltd., standard test version EPDM-70) as the adherend with methanol, it was allowed to stand still overnight under an atmosphere of 23°C and 50% RH before use. The paper release liner was peeled off from the test piece, and the adhesive agent layer of the test piece was crimped onto the test plate by reciprocating a roller weighing 2 kg once at a crimping speed of 5 mm/s. After crimping, the test piece was allowed to stand in an atmosphere of 23°C and 50% RH for 30 minutes, the play part of the test piece was folded back 180-degree and peeled off by 30 mm, then, under the same atmosphere, the test plate was fixed to the lower chuck of the peel strength tester, and the end of the test piece was fixed to the upper chuck, and the adhesive tape was peeled off from the adherend at a peeling angle of 180-degree and a speed of 300 mm/min, and the adhesive strength was measured.

<Static shear>

The adhesive tape was cut into a width of 25 mm and a length of 75 mm to prepare a test piece. The surface of an EPDM test plate as the adherend was washed with methanol, then, the test plate was allowed to stand still overnight under an atmosphere of 23°C and 50% RH before use. The test piece was crimped on the test plate by reciprocating a roller weighing 2 kg once on the test piece at a reciprocation speed of 5 mm/s so that the contact area between the adhesive agent layer of the test piece from which the paper release liner was peeled off and the test plate was 25 mm in width × 25 mm in length. Further, the portion of the test piece where the adhesive agent was exposed was folded back. After crimping, it was allowed to stand still in an atmosphere of 23°C and 50% RH for 30 minutes, then, transferred to an atmosphere of 40°C and allowed to stand still for 20 minutes. A weight of 1000 g was attached to the test piece so that the test piece hung vertically with respect to the test plate, then, a period of time until the test piece fell was measured in an atmosphere at a temperature of 40°C.

<Static shear after moist heat treatment>

A test piece prepared in the same manner as above was allowed to stand still in a constant temperature and humidity chamber adjusted to 40°C and 90% RH for 7 days and 14 days for moist heat treatment, then, the static shear was measured in the same manner as above.

[Table 1]

| | Acrylic resin (A) (parts by weight) | Epoxy crosslinking agent (b1) (parts by weight) | Isocyanate crosslinking agent (b2) (parts by weight) | Tackifier (C) (parts by weight) | Gel fraction (%) | 180-degree peel adhesion (N/25 mm) | Static shear (min) | Static shear after moist heat treatment (min) | |
|---|---|---|---|---|---|---|---|---|---|
| | | | | | | | | After 7 days | After 14 days |
| Example 1 | 100 | 0.015 | 0.25 | 15 | 36.5 | 30.9 | 164 | 180 | 129 |
| Example 2 | 100 | 0.020 | 0.25 | 15 | 40.1 | 18.4 | 180 | 121 | 141 |
| Example 3 | 100 | 0.010 | 0.35 | 15 | 36.2 | 17.0 | 145 | unmeasured | 102 |
| Comparative Example 1 | 100 | 0 | 0.48 | 15 | 24.6 | 19.1 | 7 | 8 | 13 |
| Comparative Example 2 | 100 | 0 | 0.55 | 15 | 44.0 | 12.3 | 264 | 138 | 155 |
| Comparative Example 3 | 100 | 0.024 | 0 | 15 | 35.8 | 28.7 | 198 | 30 | 10 |
| Comparative Example 4 | 100 | 0.030 | 0 | 15 | 37.8 | 10.6 | 229 | 116 | 111 |

The results shown above in Table 1 indicate that all of the exemplary products of the present disclosure using additionally the epoxy crosslinking agent (b1) and the isocyanate crosslinking agent (b2) had high peel strength with respect also to the poor adhesion adherend such as EPDM and adhered strongly to the adherend. Further, the exemplary products had high static shear for EPDM and were excellent in creeping property under a constant stress. In addition, the static shear after the moist heat treatment at 40°C and 90% RH was also maintained high.

In contrast, the product of Comparative Example 1 using only the isocyanate crosslinking agent (b2) had low static shear for EPDM, and was not usable. The product of Comparative Example 2 in which only the isocyanate crosslinking agent (b2) was used and the addition amount thereof was slightly increased as compared with Comparative Example 1 had low peel strength with respect to EPDM and was inferior in adhesiveness. When only the isocyanate crosslinking agent (b2) was used, it was not possible to stably satisfy both the adhesiveness and the static shear with respect to EPDM.

Further, the product of Comparative Example 3 using only the epoxy crosslinking agent (b1) was excellent in the adhesiveness and the static shear with respect to EPDM, however, had the static shear decreased significantly after the moist heat treatment and was inferior in moist heat resistance.

In contrast, the product of Comparative Example 4 in which the content of the epoxy crosslinking agent (b1) was increased slightly as compared with Comparative Example 3 for improving the static shear after the moist heat treatment of Comparative Example 3 exhibited an improvement in the static shear after the moist heat treatment, however, had low peel strength and was inferior in adhesiveness.

That is, it is understood that an adhesive tape using an adhesive composition comprising an acrylic resin (A) prepared by copolymerizing a copolymerization formation (a) containing a specific terminal carboxy-containing monomer (a1), a (meth)acrylic acid monomer (a2) and a hydroxyl-containing monomer (a3); and an epoxy crosslinking agent (b1), and an isocyanate crosslinking agent (b2) has both more excellent adhesiveness and high static shear with respect to EPDM, and further, to poor adhesion adherends such as CR, NR, SBR and IIR, and maintains high static shear stably even when exposed to high temperature/high humidity.

Although specific embodiments of the present disclosure have been shown in examples described above, the examples are merely examples and are not to be construed in a limited manner. Various variations apparent to those skilled in the art are intended to be within the scope of the present disclosure.

The adhesive composition of the present disclosure is excellent in adhesiveness to rubber-based poor adhesion adherends, particularly to poor adhesion adherends such as ethylene propylene diene rubber (EPDM). Therefore, the adhesive composition can be used in a wide variety of applications for packaging tapes such as craft tapes, OPP tapes, and fabric adhesive tapes, light packaging adhesive cellophane tapes, automotive foam tapes, damping sheets, housing protection tapes, soundproof seals, carpet fixing double-sided tapes, electrically insulative vinyl tapes, exterior corrosion-proof tapes, interior bulletin board tapes, slippage preventing tapes, airtight waterproof adhesive tapes, medical band aids and other patch bases, surgical tapes, adhesive bandages, electric/electronic device tapes, optical double-sided tapes, semiconductor device dicing tapes, heat conductive tapes, heat resistant tapes, and electrically conductive tapes. Particularly, the adhesive composition is suitably used for tapes used in the field where moist heat resistance is required.

## Claims

1. An adhesive composition, comprising:
   an acrylic resin (A) containing a terminal carboxyl-containing monomer (a1) unit represented by formula (1), a (meth)acrylic acid monomer (a2) unit, and a hydroxyl-containing monomer (a3) unit; an epoxy crosslinking agent (b1), and an isocyanate crosslinking agent (b2):

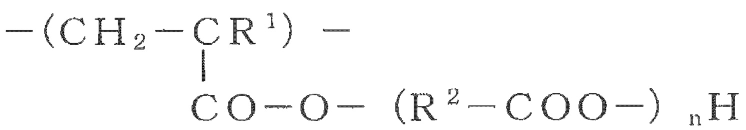

・・・ (1)

   wherein:

   $R^1$ represents hydrogen or a methyl group,
   $R^2$ represents a saturated divalent aliphatic group, an unsaturated divalent aliphatic group, a divalent aromatic group, a saturated divalent alicyclic group, or an unsaturated divalent alicyclic hydrocarbon group, and
   n is a positive number of not less than 1.

2. The adhesive composition according to claim 1, wherein a gel fraction of the adhesive composition when the adhesive

composition is crosslinked is not less than 30 wt.%.

**3.** The adhesive composition according to claim 1 or 2, wherein an adhesive tape having an adhesive agent prepared by crosslinking the adhesive composition formed on a substrate has a 180-degree peel adhesion in conformity with JIS Z0237 with respect to ethylene propylene diene rubber of not less than 15 N/25 mm and has a static shear according to the following measurement method of not less than 50 minutes:

an adhesive agent layer of the adhesive tape cut into a width of 25 mm and a length of 150 mm is crimped onto ethylene propylene diene rubber so that the contact area between the adhesive agent layer and the ethylene propylene diene rubber is 25 mm in width × 25 mm in length to obtain a resulting structure,
the resulting structure is subjected to moist heat treatment at 40°C and 90%RH for 14 days,
then, a weight of 1000 g is attached to the adhesive tape so that the adhesive tape hangs vertically with respect to the ethylene propylene diene rubber,
then, a period of time until the adhesive tape falls in an atmosphere at a temperature of 40°C is measured.

**4.** The adhesive composition according to any one of claims 1 to 3, wherein the acrylic resin (A) contains:

1 to 20 wt.% of the monomer (a1) unit;
0.1 to 5 wt.% of the monomer (a2) unit;
0.01 to 5 wt.% of the monomer (a3) unit; and
55 to 97 wt.% of a (meth)acrylate monomer (a4) unit having a C4 to C24 alkyl group.

**5.** The adhesive composition according to any one of claims 1 to 4, wherein a content of the (meth)acrylic acid monomer (a2) unit based on 100 parts by weight of the terminal carboxyl-containing monomer (a1) unit represented by formula (1) is 10 to 400 parts by weight.

**6.** The adhesive composition according to any one of claims 1 to 5, wherein a content of the epoxy crosslinking agent (b1) based on 100 parts by weight of the isocyanate crosslinking agent (b2) is 2.5 to 25 parts by weight.

**7.** The adhesive composition according to any one of claims 1 to 6, further comprising a tackifier (C).

**8.** The adhesive composition according to any one of claims 1 to 7, wherein the adhesive composition is used for poor adhesion adherends.

**9.** An adhesive agent prepared by crosslinking the adhesive composition according to any one of claims 1 to 8.

**10.** The adhesive agent according to claim 9, wherein a gel fraction of the adhesive composition is not less than 30 wt.%.

**11.** An adhesive tape, comprising:

a substrate, and
an adhesive agent formed on the substrate,
wherein the adhesive agent is the adhesive agent according to claim 9 or 10.

**12.** The adhesive tape according to claim 11, wherein a 180-degree peel adhesion in conformity with JIS Z0237 with respect to ethylene propylene diene rubber is not less than 15 N/25 mm and the static shear according to the following measurement method is not less than 50 minutes:

an adhesive agent layer of the adhesive tape cut into a width of 25 mm and a length of 150 mm is crimped onto ethylene propylene diene rubber so that the contact area between the adhesive agent layer and the ethylene propylene diene rubber is 25 mm in width × 25 mm in length to obtain a resulting structure,
the resulting structure is subjected to moist heat treatment at 40°C and 90%RH for 14 days,
then, a weight of 1000 g is attached to the adhesive tape so that the adhesive tape hangs vertically with respect to the ethylene propylene diene rubber,
then, a period of time until the adhesive tape falls in an atmosphere at a temperature of 40°C is measured.

## INTERNATIONAL SEARCH REPORT

International application No. PCT/JP2020/011580

A. CLASSIFICATION OF SUBJECT MATTER
C09J 11/06(2006.01)i; C09J 133/00(2006.01)i; C09J 7/38(2018.01)i
FI: C09J133/00; C09J7/38; C09J11/06

According to International Patent Classification (IPC) or to both national classification and IPC

B. FIELDS SEARCHED

Minimum documentation searched (classification system followed by classification symbols)
C09J11/06; C09J133/00; C09J7/38

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | WO 2018/168678 A1 (MITSUBISHI CHEMICAL CORPORATION) 20.09.2018 (2018-09-20) paragraphs [0011], [0065], [0073], [0116]-[0119], [0124]-[0128], tables 1-5, examples 1-14, 20 | 1-12 |
| Y | JP 2019-31586 A (THE NIPPON SYNTHETIC CHEMICAL INDUSTRY CO., LTD.) 28.02.2019 (2019-02-28) paragraph [0051] | 1-12 |
| Y | JP 2014-196446 A (BRIDGESTONE CORPORATION) 16.10.2014 (2014-10-16) paragraphs [0034], [0098] | 1-12 |
| Y | JP 2013-136665 A (TOYO INK SC HOLDINGS CO., LTD.) 11.07.2013 (2013-07-11) paragraph [0046] | 1-12 |

☒ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 03 June 2020 (03.06.2020) | 16 June 2020 (16.06.2020) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2020/011580

C (Continuation). DOCUMENTS CONSIDERED TO BE RELEVANT

| Category* | Citation of document, with indication, where appropriate, of the relevant passages | Relevant to claim No. |
|---|---|---|
| A | WO 2018/117262 A1 (MITSUBISHI CHEMICAL CORPORATION) 28.06.2018 (2018-06-28) entire text | 1-12 |
| A | JP 2006-282687 A (NIPPON CARBIDE INDUSTRIES CO., INC.) 19.10.2006 (2006-10-19) entire text, all drawings | 1-12 |

Form PCT/ISA/210 (continuation of second sheet) (January 2015)

**INTERNATIONAL SEARCH REPORT**
Information on patent family members

International application No.
PCT/JP2020/011580

| Patent Documents referred in the Report | Publication Date | Patent Family | Publication Date |
|---|---|---|---|
| WO 2018/168678 A1 | 20 Sep. 2018 | US 2020/0002579 A1 paragraphs [0014], [0077], [0086], [0136]-[0154], [0161]-[0169], tables 1-5, examples 1-14, 20 | |
| JP 2019-31586 A | 28 Feb. 2019 | (Family: none) | |
| JP 2014-196446 A | 16 Oct. 2014 | (Family: none) | |
| JP 2013-136665 A | 11 Jul. 2013 | (Family: none) | |
| WO 2018/117262 A1 | 28 Jun. 2018 | US 2019/0300758 A1 entire text | |
| JP 2006-282687 A | 19 Oct. 2006 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP HEI21990196879 A
- JP 2008127431 A
- JP 2014040500 A